# EUROPEAN PATENT APPLICATION

(11) **EP 1 793 630 A1**
(43) Date of publication of application: **06.06.2007**
(21) Application number: 06775630.4
(22) Date of filing: 08.09.2006
(51) Int. Cl.: H04Q 7/32

(54) **A REALIZATION METHOD AND DEVICE FOR PROTECTING CONFIGURATION DATA OF TERMINAL**

(30) Priority: 09.09.2005 CN 200510099798
(71) Applicant: Huawei Technologies Co., Ltd., Longgang District, Shenzhen Guangdong 518129 (CN)
(72) Inventor: LI, Hongguang, Bantian, Longgang District, Shenzhen, Guangdong 518129 (CN)
(74) Representative: Goddar, Heinz J.
(86) International application number: PCT/CN2006/002326
(87) International publication number: WO 2007/028340

(57) **Abstract**

The present invention relates to a method and a system for implementing protection of terminal configuration data. The core of the present invention is to protect user terminals based on running data safely and correctly. The details include: first, categorize the terminal data into categories; then, decide a specific condition to judge whether the modification of the data is incorrect according to the category of the data, and deny the corresponding incorrect modification. Thus, terminal service malfunction caused by incorrect modification of data can be reduced. Therefore, the implementation proposal of terminal data categorization and protection process deployed in the present invention reduces troubleshooting time, lowers service maintenance costs, and improves customer satisfaction.

## Description

### CROSS-REFERENCES TO RELATED APPLICATIONS

The present application is a continuation of PCT Application No. PCT/CN2006/002326, filed September 8, 2006, which claims priority to Chinese Patent Application No. 200510099798.0, filed September 9, 2005. All of these applications are commonly assigned and incorporated by reference herein for all purposes.

### FIELD OF THE INVENTION

The present invention relates to the network telecommunication technology field, in particular, it relates to a method for implementing protection of configuration data on a terminal.

### BACKGROUND OF THE INVENTION

With the continuous development of telecommunication networks, competitiveness in the telecommunication industry has shifted from resource-based competition to service-based competition. As the final ending point of the network, corresponding equipment will be the carrier of various value-added services, which directly determines a user's service experience.

In a telecommunication network, the terminal equipment is characterized by large numbers, a vast distribution area, distribution at the user side and other features. These terminal equipment features have become a great challenge for the service providers to ensure robust services.

Specifically, the more services that are offered on the terminal equipment, the more important terminal equipment data security becomes. A vast number of users are hoping that the services provided on the terminal equipment will become more suitable to their personal preferences, and operations will be more personalized. This means that the user can not only personally modify the data on the terminal equipment, but also choose the services provided on the terminal equipment.

However, new advancements in science and technology are leading to the increasing specialization of technologies. The vast majority of users are not familiar with the meaning and usage of these specialized terminal equipment terms. In other words, the user may mistakenly make a prohibited modification. When a network data or service associated data is mistakenly modified on a terminal, it may cause the terminal user to be unable to use services properly, or, the user may not even able to access the network provided by the service provider. Therefore, it is necessary to deploy corresponding protection measures to protect the data from being modified in the terminal.

However, at present, there has not been any protection means for protecting data in the terminal. Thus, mistakenly modifying configuration data in a terminal is inevitable. This further causes service failures that result in users being unable to use terminal equipment properly.

Consequently, once a service failure occurred, either the user has to bring the terminal to the telecommunication service provider's customer service, or the service provider has to provide on-site maintenance. This translates into lengthy troubleshooting turnaround time, high service costs and low customer satisfaction is low. Therefore, there is an urgent demand for a mechanism that protects the configuration data from being mistakenly modified in the terminal.

### BRIEF SUMMARY OF THE INVENTION

The purpose of the present invention is to provide a method and system for implementing protection of configuration data in the terminal, which can effectively provide security to configuration data which should not be allowed to be modified in the terminal.

The purpose of the present invention can be realized through the following technical proposal:

The present invention provides a method for implementing protection of terminal configuration data, including:

When it is necessary to modify the data configured in a terminal, the category information of the aforementioned configuration data and the preset conditions applied to that specific type of data to be modified in the terminal are decided;

Modification of configuration data in each category in the terminal is controlled according to the aforementioned preset conditions.

The aforementioned categories of configuration data include user secret data and service data, of which:

the aforementioned user secret data is the user's personalized data configured in the terminal;

the service data is the configuration data other than the user's secret data in the terminal.

The aforementioned preset conditions applicable to modification of specific types of configuration data in the terminal include:

the keys or check words being set up for controlling a modification process, or, the information being set up for controlling denying modification or permitting modification of the configuration data after categorization.

The aforementioned method also includes:

While terminal service undergoes initial configuration, the keys or check words are generated and saved by the Auto-configuration Server, and the corresponding keys or check words are set up in the terminal equipment.

The aforementioned configuration keys or check words perform modification via the Auto-configuration Server.

The aforementioned configuration keys or check words adopt the periodical automatic modification method performed by the Auto-configuration Server or the non-periodical manual modification method to perform modifications, as well as synchronize with the terminal equipment.

The aforementioned configuration keys may also be reset to the manufactory default through a button provided in the terminal, and the default value may be changed to a new value when the Auto-configuration Server modifies the configuration keys.

The aforementioned process of performing modification of various terminal configuration data based on the aforementioned preset controlling conditions includes:

Decide whether the modification terminal data is user secret data. If it is, allow the configuration data to be modified at this time, otherwise, constrain modification of the service data according to the configuration for the preset conditions of the service data modifications.

The aforementioned process of controlling modification of the configuration data based on the aforementioned preset conditions which are applicable to modification of the terminal configuration data includes:

When a modification is decided as the modification of service data in the terminal equipment, then, request the modification party providing the configuration key information. If the terminal equipment verified that the configuration key match with the configuration key stored therein, then, modification is permitted, otherwise, modification is denied;

Or,

When a modification is decided as the modification of service data in the terminal equipment, the terminal equipment modifies its stored check words, and after the terminal equipment, which carries the check words, establishes communication with the Auto-configuration Server, the Auto-configuration Server decides the check words sent from the terminal equipment mismatch with the locally stored check words, and it forces the data and check words in the server to synchronize with the local terminal equipment;

Or,

When a modification is decided as the modification of service data in the terminal equipment, modification operation to the service data in the terminal equipment is denied at this time.

The aforementioned modification parties include: remote equipment or terminal equipment.

The present invention also provides a system for implementing protection of the configuration data in a terminal, which includes:

A Category Information Acquisition Unit, which is used for acquiring category information of the configuration data, when modification of the terminal configuration data is needed;

A Modification Condition Acquisition Unit, which is used to decide the preset conditions for modification of configuration data of that category;

A Configuration Data Modification Unit, which is used for controlling modification of the configuration data, based on the aforementioned preset conditions.

The aforementioned Category Information Acquisition Unit acquires information about whether the terminal configuration data is user secret data or service data, of which, the aforementioned user secret data is the user's personalized data configured in the terminal, and the aforementioned service data is the configuration data other than the user's secret data in the terminal.

The aforementioned Modification Condition Acquisition Unit includes:

Decide the keys or check words during the modification controlling process set up in the terminal equipment, or decide the information on controlling a modification by prohibiting a modification or permitting a modification of the configuration data after sorting, which is set up in the terminal equipment.

The aforementioned modification condition is generated and set up by the Auto-configuration Server while terminal service undergoes initial configuration, and the aforementioned configuration keys and check words can be modified selectively by the Auto-configuration Server.

The aforementioned Configuration Data Modification Unit includes:

A Decision Processing Unit, which is used for deciding whether the terminal data to be modified belongs to user secret data. When it is decided that it is user secret data, it triggers the Modification Execution Unit, otherwise, it triggers the Service Data Modification Processing Unit;

A Modification Execution Unit, which is used for executing modification operation for the configuration data at this time;

A Service Data Modification Processing Unit, which is used for controlling modification of the service data, based on the configuration for the preset conditions of the service data modifications.

The aforementioned Service Data Modification Processing Unit includes:

Based on the Key Modification Processing Unit, when it determines that a modification is performed to the service data in the terminal equipment at this time, then, it then makes a request for the configuration key information. The terminal equipment then verifies whether the configuration key matches with its stored configuration key; if they match, then modification is granted, otherwise, modification is denied;

Or,

Based on the Check Key Modification Processing Unit, when it determines that the modification is performed to the service data in the terminal equipment at this time, the terminal equipment modifies the stored check words, and the terminal equipment, carrying the modified check words, establishes communication with the Auto-configuration Server. If the Auto-configuration Server decides the check words sent by the terminal equipment mismatches with the locally stored check words, then, the data and check words of the server is forced to synchronize with the local terminal;

Or,

A Modification Prohibition Processing Unit is used for prohibiting modification of the service data in the terminal equipment at this time, when it determines that a modification is about to be carried out to the service data in the terminal equipment.

It is clear from the aforementioned technical proposal that the present invention categorizes the terminal data into user secret data that may be modified arbitrarily and service data that may not be modified arbitrarily, which protects the service data from being modified. Therefore, on the one hand, security of the terminal service data can be improved through the data protection method, that is, service reliability and stability can be achieved under the conditions when mistakenly modifying of the service data in the terminal is avoided; on the other hand, it enables the user to modify user secret data according to their personal preferences to meet the user's demand for personalization.

### BRIEF DESCRIPTION OF THE DRAWINGS

FIG. 1 is a flowchart showing the detailed implementation based on the configuration key processing procedure in the present invention;

FIG. 2 is a flowchart showing the detailed implementation based on the check word processing procedure in the present invention;

FIG. 3 is a structural scheme showing the detailed implementation of the aforementioned device in the present invention.

### DETAILED DESCRIPTION OF THE INVENTION

Embodiments for Implementing the Present Invention

The core of the present invention is to carry out modification of terminal data based on the specified conditions, in order to protect normal user terminal operations, avoid arbitrary modifications, improve data security, and reduce service failures.

The data protection method of the present invention is achieved through the following technical proposals:

First, the present invention categorizes the configuration data in the terminal, that they are specifically categorized into user secret data and service data, of which:

The aforementioned user secret data is the user personalized data configured in the terminal. Whether or not this data are modified will not affect the terminal network access and the use of services.

The aforementioned service data is data other than user secret data, which include equipment network configuration parameters and specific service associated parameters, etc. Correct configuration of service data determines whether or not the terminal can access the network properly and use the services correctly.

The specific categorization definition of user secret data and service data in the terminal is individually decided by each equipment manufacturer.

Afterwards, the corresponding protection mechanism is deployed to protect the service data in the terminal equipment. Specifically, it can be implemented through the method of setting up configuration keys. Or, it can be implemented through the method of setting up check words for modification of service data on the network side. Or, it can be directly set up to deny service data modification in the terminal equipment.

Three detailed service data protection mechanisms are described below, respectively.

1. The deployment of the configuration key method for implementing the present invention:

Therefore, keys for modification of service data need to be configured.

The detailed configuration method for the aforementioned keys is the following: when the terminal services are initially configured, the Auto-configuration Server generates the configuration keys which are newly added, at the same time, these configuration keys are set up in the terminal equipment, and it is also necessary to store the aforementioned keys in the Auto-configuration Server.

The Keys may be retained unchanged after the configuration, and they also can be changed according to the needs. The method of changing the configuration key details include: the deployment of periodic automatic modification by the Auto-configuration Server and synchronization with the terminal method, or, the deployment of manual modification by a service provider maintenance personnel, and forcing to synchronize with the equipment method. These two methods for changing keys require refreshing the keys configured in the terminal equipment after the modification.

At the same time, the keys configured in the terminal equipment can only be modified from the Auto-configuration Server. The configuration key modification feature is not provided in the local maintenance interface of the terminal in the present invention, in order to reinforce security. The configuration keys can be reset to the manufacture default through the button set up in the terminal, and a null value is recommended. This default value may be changed to a new key value upon the Auto-configuration Server changing the configuration keys.

After completing configuration of the keys, changing of the service data in the terminal equipment requires providing configuration keys. The terminal equipment then needs to verify whether or not the configuration keys provided matches with the original configuration keys, before the service data can be modified. It also determines whether or not to change the service data according to the verification results.

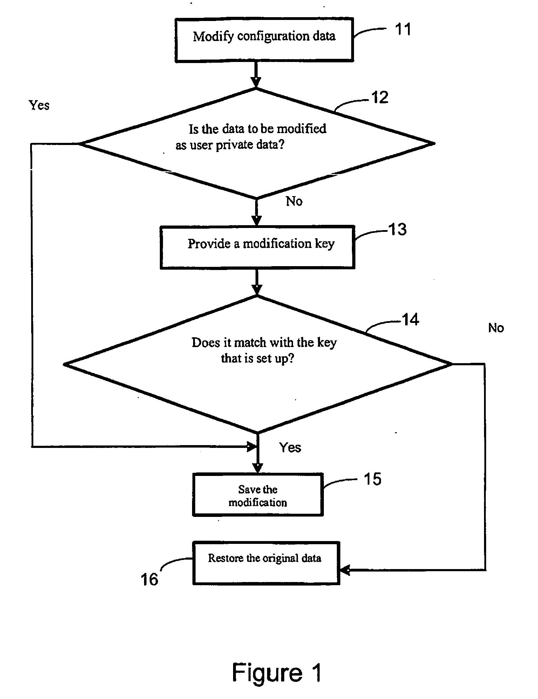

The procedure for using these keys will be described in details below, as shown in FIG. 1, it includes:

Step 11: Modify the configuration data in the terminal equipment;

The details include configuration data modification in the terminal equipment locally and configuration data modification in the terminal equipment remotely through remote equipment;

Step 12: Decide whether the modification data is user secret data. If it is, then execute step 15, otherwise, execute step 13;

Data modification may be performed in the local terminal equipment or from the Auto-configuration Server.

Step 13: Request the modification party to provide a key in order to modify the configuration data;

If the modification is performed in the terminal equipment locally, then, request the modification party to input a key in the local maintenance interface of the terminal equipment; if the modification is performed remotely, then, request the remote system to provide the corresponding key;

Step 14: Decide whether the key provided by the modification party matches with the key configured in the terminal equipment. If it is, then execute step 15, otherwise, execute step 16;

Step 15: Save the modified data;

Step 16: Prohibit modification of the configuration data in the terminal equipment at this time. Specifically, deny modification of the service data in the terminal equipment at this time.

2. Deployment of the method of using check words to implement the present invention;

Therefore, configuration of check words is required. The specific configuration method is: the Auto-configuration Server generates check words during terminal service initial configuration, and at the same time, the check words are set in the terminal and stored in the Auto-configuration Server, respectively;

Also, the configured check words may stay unchanged, and can be changed as needed. The method that can be deployed to change the configured check words includes: the deployment of periodical automatic modification by the Auto-configuration Server and synchronization with the terminal method, or the deployment of changing the check words at the Auto-configuration Server manually by a service provider maintenance personnel and forcing synchronization with the equipment method. These two methods all require refreshing the check words in the terminal equipment after changing.

Meanwhile, in order to reinforce security of the check words, the check words modification feature is not provided in the maintenance interface of the terminal equipment, and modification is only available through the Auto-configuration Server.

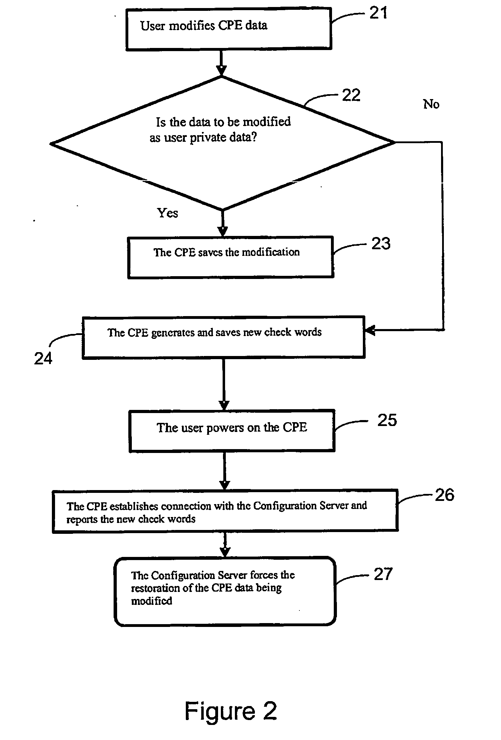

After configuring the corresponding check words, the configuration data in the terminal equipment can be protected based on the Auto-configuration Server check words, and the corresponding processing procedure is as shown in FIG. 2, which includes:

Step 21: A user can modify the configuration data in the CPE (Customer Premise Equipment) through the CPE maintenance interface;

Step 22: Decide whether the CPE configuration data to be modified is user secret data or service data. If it is user secret data, then execute Step 23; if it is service data, then execute Step 24;

Step 23: Save configuration data modification at this time, that is, no constraint is applied to modification of the configuration data.

Step 24: Generate new check words in the CPE and save them in the CPE; these check words are different from the check words configured in the terminal equipment (that is, the match with the check words in the Auto-configuration Server), and continue to execute Step 25;

Step 25: Power on the CPE, when a user using it;

Step 26: After the CPE is powered on and establishes connection with the Auto-configuration Server, report and store the regenerated check words;

Step 27: The results of the process of judging whether the modified check words are correct by the Auto-configuration Server must be incorrect, because the check words are already regenerated on the CPE. Thus, the Auto-configuration Server forcefully recovers the modified configuration data in CPE, so that they will match with the configuration data stored in the Auto-configuration Server, and recover the aforementioned check words to match with the check words stored in the Auto-configuration Server.

3. The present invention also provides an implementation method that directly denies service data modification, which is set up in the terminal equipment, that is, this is an implementation proposal without the deployment of configuration keys and check words, and the details are as follows:

The terminal decides whether the terminal data to be modified is a service data without using configuring keys or check words. If it is service data, then, directly deny modification of that data through the terminal equipment, and that data can only be modified by a system assigned by the Auto-configuration Server parameter in the equipment, and a local maintenance interface is not provided to the terminal equipment. Otherwise, the configuration data in the terminal to be modified is user secret data, then, modification of that terminal data is not restricted.

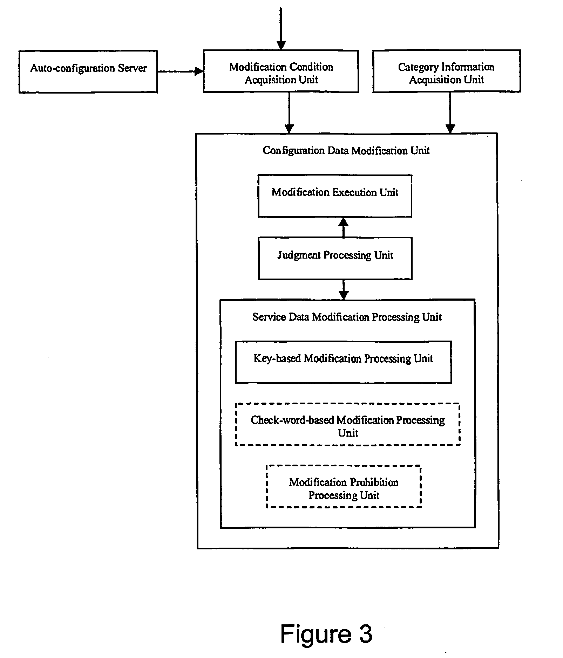

The present invention also provides an implementation system for protecting terminal configuration data. The detailed implementation structure is as shown in FIG. 3, and it primarily includes the following processing units:

(1) The Category Information Acquisition Unit, which is used for acquiring the category information of the configuration data when modification of the terminal configuration data is necessary;

The aforementioned Category Information Acquisition Unit can specifically decide whether the terminal configuration data need to be modified is user secret data or service data, of which, the user secret data is the user's personalized data configured in the terminal, and the aforementioned service data is the configuration data other than the user secret data in the terminal;

Or, the data configured in the terminal equipment may deploy other data sorting methods for categorizing management.

(2) The Modification Condition Acquisition Unit is used to decide the preset conditions for modification terminal configuration data of that category;

Specifically, the aforementioned Modification Condition Acquisition Unit includes: decide the keys or check words set in the terminal equipment for controlling modification, or decide the information about granting modification or denying modification of the configuration data set in the terminal equipment after controlling the category;

Specifically, the aforementioned modification condition is generated by the Auto-configuration Server during terminal service initial configuration and set up in the aforementioned terminal equipment; the aforementioned configuration keys or check words are selectively updated by the aforementioned Auto-configuration Server.

(3) The Configuration Data Modification Unit is used to control modification of the terminal configuration data according to the preset conditions; specifically, the aforementioned Configuration Data Modification Unit may include:

A Judgment Processing Unit is used to judge whether the terminal data to be modified is user secret data. When it decides that it is a user secret data, then it decides to grant modification at this time, which triggers the Modification Execution Unit. Otherwise, it triggers the Service Data Modification Processing Unit, in order to modify the service data configured in the terminal equipment according to the preset conditions.

The Modification Execution Unit is used to execute modification operation of the configuration data at this time;

The Service Data Modification Processing Unit is used for controlling modification of the service data, based on the configuration for the preset conditions of the service data modifications, and the aforementioned Service Data Modification Processing Unit includes:

Based on the Key Modification Processing Unit, when it is decided that the service data has been modified in the terminal equipment at this time, it then makes a requests for configuration key information. Then the terminal equipment verifies whether the configuration key matches with its stored configuration key; if they match, then modification is granted, otherwise, modification is denied;

Or,

Based on the Check Words Modification Processing Unit, when it is decided that the service data has been modified at this time, the terminal equipment modifies the stored check words, and the terminal equipment, carrying the modified check words, establishes communication with the Auto-configuration Server. If the Auto-configuration Server decides the check words sent by the terminal equipment mismatches with the locally stored check words, then the data and check words of the server is forced to synchronize with the local terminal;

Or,

The Modification Prohibition Processing Unit, which is used for determining that service data has been modified in the terminal equipment, prohibits modification of the service data in the terminal equipment at this time.

Of course, it is acceptable to control the modification of the service data configured in the terminal equipment according to other preset conditions for the purpose of avoiding making a change by mistake.

In summary, the present invention implements a protection method based on terminal data categorization. First, the terminal data are defined as user secret data that can be randomly modified according to the user's preference, and service data that cannot be randomly changed. Operation and maintenance are carried out on this basis. Thus, the user's demand for diversity and personalization over terminal service selections can be met, and the terminal data being modified in an abnormal manner can be prevented. Thus, the occurrence of failures leading to terminal equipment malfunctioning can be avoided, and customer service satisfaction can be improved.

As stated above, this invention may be embodied in other specific forms without departing from the spirit or essential characteristics of said invention. The embodiments disclosed in this application are to be considered in all respects as illustrative and not restrictive, the scope of the invention being indicated by the appended claims rather than by the foregoing description. Therefore, all changes that come within the meaning and range of equivalency of the claims are intended to be embraced therein.

## Claims

1. A method for implementing protection of terminal configuration data **characterized by** including:
when a modification of terminal configuration data is needed, determining category information of said configuration data and a predetermined condition for modification of terminal configuration data in that category;
controlling the modification of terminal configuration data in each category according to said predetermined condition.

2. The method for implementing protection of terminal configuration data according to claim 1, wherein categories of said configuration data include user secret data and service data, of which:
said user secret data are a user's personalized data configured in a terminal;
said service data are configuration data other than the user secret data in the terminal.

3. The method for implementing protection of terminal configuration data according to claim 1 or 2, wherein said predetermined condition for modification of terminal configuration data in that category includes:
a determined key or check word for controlling a modification process, or, the information for controlling of denying a modification or granting the modification of the configuration data after categorization.

4. The method for implementing protection of terminal configuration data according to claim 3, wherein said method also includes:
configuring and storing a configuration key or check word by an auto-configuration server when a terminal service is initially configured, and setting the corresponding key or check word to terminal equipment.

5. The method for implementing protection of terminal configuration data according to claim 4, wherein said configuration key or check word is modified by the auto-configuration server.

6. The method for implementing protection of terminal configuration data according to claim 5, wherein said configuration key or check word adopt a periodical automatic modification performed by the auto-configuration server or a non-periodical manual modification, which is forced to synchronize with the terminal equipment.

7. The method for implementing protection of terminal configuration data according to claim 6, wherein said configuration key may also be reset to a manufactory default value through a button provided in the terminal, and the default value may be changed to a new value upon the auto-configuration server modifying the configuration key.

8. The method for implementing protection of terminal configuration data according to claim 3, wherein said process of controlling the modification of terminal configuration data in each category according to said predetermined condition includes:
determining whether the modified terminal data are user secret data; if they are, permitting the modification of the configuration data at this time; otherwise, constraining the modification of service data according to the predetermined condition configured for the service data modification.

9. The method for implementing protection of terminal configuration data according to claim 8, wherein said process of constraining the modification of the terminal configuration data based on said predetermined condition which is applicable to the modification of the terminal configuration data includes:
when determining the modification to be the modification of the service data in terminal equipment, then, requesting a modification party to provide configuration key information; if the terminal equipment verifies that the provided configuration key matches with a configuration key stored therein, then, permitting the modification, otherwise, rejecting the modification;
or,
when determining the modification to be the modification of the service data in the terminal equipment, the terminal equipment modifying its stored check word; after the terminal equipment carrying the check word establishing a communication with the auto-configuration server, the auto-configuration server determining that the check word sent from the terminal equipment mismatches with a locally stored check word, then forcing server data and the check word in the server to synchronize with local terminal equipment;
or,
when determining the modification to be the modification of the service data in the terminal equipment at this time, rejecting a modification operation to the service data in the terminal equipment.

10. The method for implementing protection of terminal configuration data according to claim 9, wherein said modification party includes: remote equipment or the terminal equipment.

11. A system for implementing protection of terminal configuration data **characterized by** including:
a category information acquisition unit, used for acquiring category information of terminal configuration data, when a modification of the terminal configuration data is needed;
a modification condition acquisition unit, used to determine a preset condition for a modification of the configuration data in that category;
a configuration data modification unit, used for controlling the modification of the configuration data, based on said preset condition.

12. The system for implementing protection of terminal configuration data according to claim 11, wherein said category information acquisition unit acquires information about whether the terminal configuration data is user secret data or service data, of which, said user secret data are a user's personalized data configured in a terminal, and said service data are configuration data other than the user's secret data in the terminal.

13. The system for implementing protection of terminal configuration data according to claim 11 or 12, wherein said modification condition acquisition unit includes:
determining a key or check word, setup in terminal equipment, for controlling a modification process, or determining information, setup in the terminal equipment, for controlling of denying a modification or granting the modification of the configuration data after categorization.

14. The system for implementing protection of terminal configuration data according to claim 13, wherein said condition for the modification is generated and set up by an auto-configuration server during terminal service initial configuration, and said configuration key or check word can be modified selectively by the auto-configuration server.

15. The system for implementing protection of terminal configuration data according to any one of claims 11 through 14, wherein said configuration data modification unit includes:
a judgment processing unit, used to determine whether the terminal data to be modified belong to user secret data; when they are determined to be the user secret data, the decision processing unit triggering a modification execution unit, otherwise, the decision processing unit triggering a service data modification processing unit;
the modification execution unit, used for executing a modification operation for the configuration data at this time;
the service data modification processing unit, used for controlling a modification of service data, based on a configuration of the preset condition for the modification of the service data.

16. The system for implementing protection of terminal configuration data according to claim 15, wherein said service data modification processing unit includes:
based on a key modification processing unit, when it is determined that the service data are being modified in terminal equipment at this time, then making a request for a configuration key information; the terminal equipment then verifying whether the configuration key matches with a configuration key stored therein; if they match, then permitting the modification, otherwise, rejecting the modification;
or,
based on a check word modification processing unit, when it is determined that the service data are being modified in the terminal equipment at this time, the terminal equipment modifying a stored check word, and the terminal equipment, carrying the modified check word, establishing a communication with an auto-configuration server; if the auto-configuration server determining the check word sent by the terminal equipment mismatches with a locally stored check word, then the data and the check word of the server being forced to synchronize with a local terminal;
or,
the modification prohibition processing unit, used for determining that the service data are being modified in the terminal equipment, prohibiting modification of the service data in the terminal equipment at this time.
